(19) **Europäisches Patentamt**
**European Patent Office**
**Office européen des brevets**

(11) Veröffentlichungsnummer: **0 435 044 A2**

(12) **EUROPÄISCHE PATENTANMELDUNG**

(21) Anmeldenummer: **90123614.1**

(22) Anmeldetag: **08.12.90**

(51) Int. Cl.⁵: **B32B 31/08, B32B 27/08**

(30) Priorität: **23.12.89 DE 3942892**

(43) Veröffentlichungstag der Anmeldung:
**03.07.91 Patentblatt 91/27**

(84) Benannte Vertragsstaaten:
**DE FR GB IT**

(71) Anmelder: **BAYER AG**

**W-5090 Leverkusen 1 Bayerwerk(DE)**

(72) Erfinder: **Fischer, Frank, Dipl.-Ing., Univ. of Washington MB**
**School of Business Admin., 137 McKenzie Hall DJ-10**
**Seattle, Washington 98(US)**
Erfinder: **Schulte, Bernhard, Dr.**
**Doppelfeldstrasse 15**
**W-4150 Krefeld(DE)**
Erfinder: **Klöpper, Hans-Joachim, Dipl.-Ing.**
**Treppenstrasse 15**
**W-5860 Iserlohn(DE)**
Erfinder: **Kleiner, Frank-Gerald, Dr.**
**Am Sonnenhang 62**
**W-5090 Leverkusen 3(DE)**

(54) **Halbzeug mit elektrisch leitenden Kunststoffschichten.**

(57) Es wird ein neues, schichtiges Halbzeug aus Schichten thermoplastisch verarbeitbaren Kunststoffes beschrieben, von denen mindestens eine Schicht ein elektrisch leitender Kunststoff ist. Das neue Halbzeug ist gekennzeichnet durch Schweißverbindungen zwischen den Schichten und eine hohe Leitfähigkeit der elektrisch leitenden Kunststoffschicht auch nach dem Verschweißen. Aufgrund seiner Festigkeit und der hohen elektrischen Leitfähigkeit läßt sich das neue Halbzeug auf vielfältige Weise nutzen.

EP 0 435 044 A2

# HALBZEUG MIT ELEKTRISCH LEITENDEN KUNSTSTOFFSCHICHTEN

Die vorliegende Erfindung betrifft neue Halbzeuge, die aus mindestens zwei Schichten von Kunststoff bestehen, wovon mindestens eine Schicht ein elektrisch leitender Kunststoff ist.

Halbzeuge dieser Art sind beispielsweise aus der deutschen Offenlegungsschrift DE-3 340 930-A1 bekannt. Das bekannte Halbzeug besteht jedoch lediglich aus zwei Schichten von Polycarbonat. Die elektrisch leitfähige Schicht enthält zusätzlich Ruß oder Graphit. Die nichtleitende Schicht besteht entweder aus reinem Polycarbonat oder zu mindestens 55 Gew.-% aus Polycarbonat.

Das bekannte Halbzeug besitzt den Nachteil, daß die elektrisch leitende Schicht und die zweite Schicht den gleichen Kunststoff als Basismaterial aufweisen müssen, damit das Halbzeug neben dem relativ geringen elektrischen Widerstand auch eine gute Festigkeit der Verbindung zwischen beiden Schichten aufweist. Diese Einschränkung behindert den Einsatz des bekannten Halbzeuges bei vielen Anwendungen.

Bekannt ist ferner ein Verfahren zum Verschweißen zweier PVC-Folien mittels einer zwischen die zu verschweißenden Folien gelegten, elektrisch leitenden Folie, die ebenfalls aus dem gleichen Grundmaterial besteht (PVC) und während des Schweißvorganges vollständig aufgeschmolzen wird (JP-8 723 088). Die zwei Folien, die in diesem Verfahren miteinander verschweißt werden, sind nicht elektrisch leitend.

Es besteht daher die Aufgabe, verbesserte Halbzeuge zu entwickeln, die aus Kunststoffschichten bestehen, wovon mindestens eine Schicht ein elektrisch leitender Kunststoff ist. Die Verbindungen zwischen den Schichten sollten dabei eine hohe mechanische Festigkeit aufweisen, um vielseitige Anwendungen zu ermöglichen. Gleichzeitig sollten die elektrisch leitenden Schichten auch im Laminat eine genügend hohe Leitfähigkeit aufweisen, um auch im Bereich von Niederspannungen bis maximal 500 Volt technische Anwendungen zuzulassen. Aus diesem Grunde sollte der spezifische Widerstand der einzelnen elektrisch leitenden Schichten unter 100 $\Omega \cdot cm$, bevorzugt unter 5 $\Omega \cdot cm$, besonders bevorzugt unter 2 $\Omega \cdot cm$ liegen.

Das neue Halbzeug ist dadurch gekennzeichnet, daß beide Kunststoffschichten ein unterschiedliches Basismaterial aufweisen und zwischen der elektrisch leitenden Kunststoffschicht und der zweiten Kunststoffschicht eine Schweißverbindung besteht und die elektrisch leitende Kunststoffschicht noch mindestens 40 % ihrer ursprünglichen Leitfähigkeit besitzt.

Zwei Kunststoffe besitzen im Sinne der Erfindung ein unterschiedliches Basismaterial, wenn sie sich in der Komponente mit dem jeweils größten Gewichtsanteil unterscheiden.

Die ursprüngliche Leitfähigkeit ist hierbei jene Leitfähigkeit, welche die elektrisch leitende Kunststoffschicht vor der Verschweißung zu dem neuen Schichtstoff besitzt. Ein Vorteil des neuen Kunststofflaminats gegenüber den bekannten Halbzeugen aus elektrisch leitenden und nicht elektrisch leitenden Kunststoffschichten besteht in der hohen mechanischen Festigkeit aufgrund der Schweißverbindung zwischen den Schichten, insbesondere zwischen den elektrisch leitenden und den nicht leitenden Schichten. Mit einer solchen stoffschlüssigen Verbindung wird sogar die Festigkeit des Grundwerkstoffes erreicht, obwohl die nichtleitenden Kunststoffe an der Verbindungsstelle angeschmolzen werden. Ein zweiter Vorteil ist die gute Erhaltung der elektrischen Leitfähigkeit in der leitenden Kunststoffschicht. Bei der Verwendung faserverstärkter Kunststoffe als Schichtmaterial übersteigt die Festigkeit der Verbindung beispielsweise sogar die Faser-Matrix-Haftung. Die nach dem Verschweißen der Kunststoffschichten gemessene elektrische Leitfähigkeit der leitenden Kunststoffschicht beträgt mindestens 40 %, häufig sogar über 50 % bis über 70 % der ursprünglichen Leitfähigkeit, also jener elektrischen Leitfähigkeit, welche die elektrisch leitende Kunststoffschicht vor dem Verschweißen besaß.

Die Verwendung elektrisch leitender Kunststoffe mit Polycarbonaten als Basismaterial, insbesondere auf der Grundlage von Bisphenol A, wie beispielsweise in EP 014 310 B1 beschrieben, oder auf der Grundlage von Dihydroxydiphenylcycloalkanen, wie beispielsweise in der deutschen Patentanmeldung der Anmelderin (P 3 832 396, Titel: Dihydroxydiphenylcycloalkane, Polycarbonate), wobei die Cycloalkane bevorzugt mit Methylgruppen, insbesondere in der 3- bzw. 3,3-Stellung, substituiert sind, ist besonders vorteilhaft. Ein Vorteil besteht in der beobachteten Eigenschaft der verwendeten elektrisch leitenden Polycarbonate, mit einer Vielzahl von Kunststoffen mechanisch besonders belastbare Verbindungen einzugehen. Die elektrisch leitenden Polycarbonate eignen sich besonders auch zur Herstellung des neuen Halbzeugs unter Verwendung von temperaturbeständigen Kunststoffen. Temperaturbeständige Kunststoffe zeichnen sich durch eine hohe Schmelztemperatur bzw. hohe Zersetzungstemperatur aus. Da sich die Schmelztemperaturen, besonders der amorphen Kunststoffe nicht genau angeben lassen, sind hier mit temperaturbeständigen Kunststoffen solche gemeint, die sich beispielsweise oberhalb von 220 °C oder sogar oberhalb von 240 °C, in Fällen von hochtemperaturbeständigen Kunststoffen sogar über 280°C noch mittels Spritzguß verarbeiten lassen. Weiter werden durch den Zusatz nichtmetallischer, elektrisch leitender Stoffe, insbesondere Leitfähigkeitsruß, zum einen Korrosionen, zum anderen Kerbungen innerhalb des neuen Halbzeuges vermieden.

Als nichtleitende Kunststoffe eignen sich viele der thermoplastisch verarbeitbaren, auch mehrphasigen Polymerisationskunststoffe. Beispielsweise lassen sich Polyarylensulfide, insbesondere Polyphenylensulfid, sowie Polyester auf der Basis aromatischer Dicarbonsäuren und Glycolen als Schichtmaterialien verwenden, ebenso Copolymerer und Polymerblends wie beispielsweise Acrylnitril-Butadien-Styrol-Polymerisate. Diese nicht leitenden Kunststoffe können auch in faserverstärkten Varianten im neuen Halbzeug integriert werden, wobei sich die an sich bekannten, guten mechanischen Eigenschaften faserverstärkter Kunststoffe auf das neue Halbzeug übertragen lassen.

Halbzeuge mit diesen Eigenschaften können nach weiterer Verarbeitung überall dort zum Einsatz kommen, wo eine elektrische Stromführung bzw. ein elektrisches Heizen durch Metalldrähte geschieht. Die hohe elektrische Leitfähigkeit des neuen Werkstoffes macht ebenfalls den Einsatz bei Spannungen unter 380 Volt möglich. Als besondere Einsatzgebiete wären die Verwendung im Bereich elektrischer Haushaltsgeräte, z.B. als Folien in elektrischen Heizkissen oder Heizdecken, bei elektrischen Fußbodenheizungen, zur vereinfachten Beschichtung von Kunststoffen mit pulvrigen Substanzen, zum UV-Schutz von Kunststoffen, etc. denkbar.

In der Zeichnung ist das neue Halbzeug in mehreren Beispielen in der Seitenansicht dargestellt und nachstehend beschrieben:

Es zeigen:

Fig. 1 Halbzeug aus zwei Schichten thermoplastischen Kunststoffes 1, 3 und einer Schicht eines elektrisch leitenden Kunststoffes 2, wobei zwischen den einzelnen Schichten 1, 2, 3 jeweils Schweißverbindungen 4 bestehen,

Fig. 2 Halbzeug aus zwei Schichten elektrisch leitenden Kunststoffes 21, 23 und einer Schicht thermoplastischen Kunststoffes 22, wobei zwischen den einzelnen Schichten 21, 22, 23 jeweils Schweißverbindungen 24 bestehen,

Fig. 3 Halbzeug aus zwei Schichten elektrisch leitenden Kunststoffes 31, 33 und einer Schicht thermoplastischen, faserverstärkten Kunststoffes 32, wobei zwischen den einzelnen Schichten 31, 32, 33 jeweils Schweißverbindungen 34 bestehen,

Fig. 4 Halbzeug aus zwei Schichten thermoplastischen, glasfaserverstärkten Kunststoffes 41, 43 und einer Schicht eines elektrisch leitenden Kunststoffes 42, wobei zwischen den einzelnen Schichten 41, 42, 43 jeweils eine Schweißverbindung 44 besteht,

Fig. 5 Halbzeug aus zwei elektrisch leitenden Kunststoffschichten 51, 54 und zwei nicht leitenden, faserverstärkten Kunststoffschichten 52, 53, wobei zwischen den einzelnen Schichten 51, 52, 53, 54 jeweils Schweißverbindungen 55 bestehen,

Fig. 6 Halbzeug aus zwei elektrisch leitenden Kunststoffschichten 61, 64 und einer nicht leitenden Kunststoffschicht 62 und einer nicht leitenden, faserverstärkten Kunststoffschicht 63, wobei zwischen den einzelnen Schichten 61, 62, 63, 64 jeweils Schweißverbindungen 65 bestehen.

Fig. 7 Halbzeug aus 6 Schichten thermoplastischen, glasfaserverstärkten Kunststoffen 71, 73, 75, 77, 79, 81 und 5 Schichten eines elektrisch leitenden Kunststoffes 72, 74, 76, 78, 80, wobei zwischen den Schichten 71, 72, 80, 81 jeweils eine Schweißverbindung 82 besteht.

Die in diesen Beispielen verwendeten Kunststoffe sind die oben aufgeführten.

Zur Herstellung des neuen Halbzeuges kommen unter anderem die bekannten Verfahren wie Wärmekontaktschweißen oder Heizkeil-Überlappungsschweißen (Kunststoff-Taschenbuch, 23. Ausgabe, 1986, Seite 185) in Frage.

Eine weitere Vorrichtung zur diskontinuierlichen Herstellung des neuen Halbzeuges ist beispielsweise eine Presse, bestehend aus zwei beheizbaren Preßbacken, zwei polierten Stahlplatten sowie einem zum Pressen geeigneten Rahmen. Die Kunststoffschichten werden in der gewünschten Reihenfolge in diesen Preßrahmen eingelegt und zusammen mit den Stahlplatten, die der besseren Entformung dienen, zwischen die vorgeheizten Backen des Preßwerkzeuges gebracht. Danach wird die Presse unter geringem Druck geschlossen. Anschließend wird das Material auf eine Temperatur von bevorzugt 150 bis 400°C, insbesondere bevorzugt von 200 bis 350°C erwärmt. Nach dem Aufschmelzen der Schichten wird der Stoff bei Drücken von bis zu 50 N/mm² gepreßt. Das Abkühlen des Materials geschieht zum Schrumpfausgleich unter Preßdruck. Bei Erreichen einer Temperatur von unter 100°C wird die Platte entnommen und entformt.

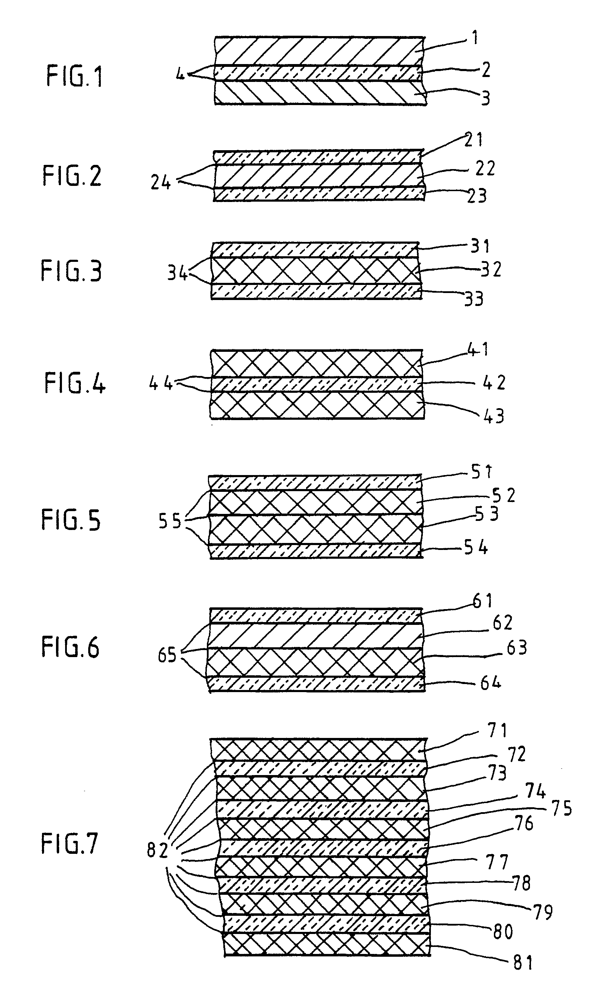

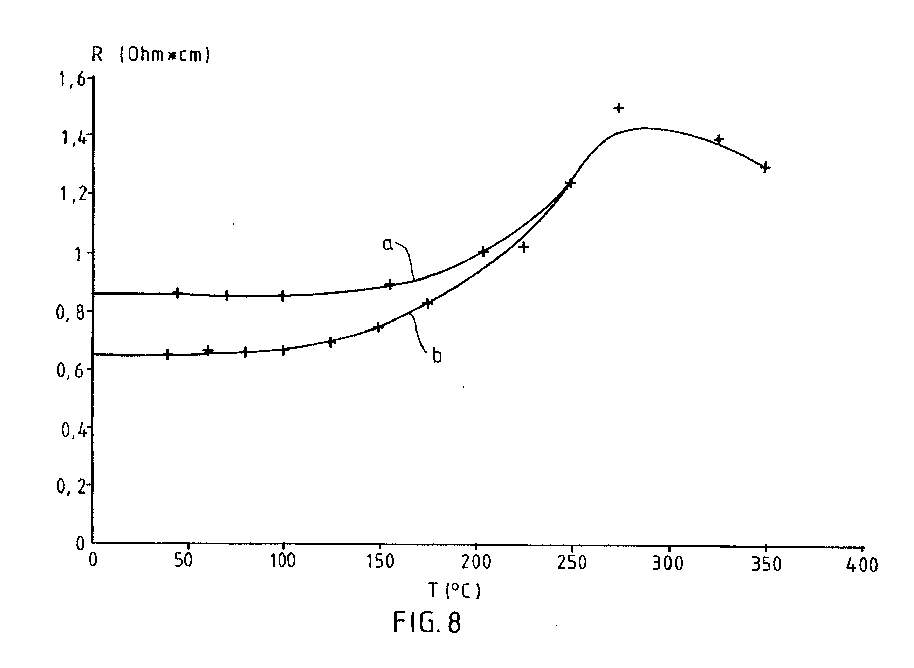

Messungen des spezifischen Durchgangswiderstandes gegenüber der Temperatur an der leitenden Kunststoffschicht an einer auf diese Weise hergestellten Platte gemäß Fig. 4, wobei die nicht leitenden Schichten 41, 43 aus faserverstärktem PPS und die elektrisch leitende Schicht 42 aus rußgefüllter PC-Folie besteht, zeigt Fig. 8, wobei Kurve b den Widerstandsverlauf beim Aufheizen und Kurve a den Widerstandsverlauf beim Abkühlen bzw. nach dem Verschweißen beschreibt. Es ergibt sich ein spezifischer Durchgangswiderstand von 0,9 Ohm•cm gegenüber 0,7 Ohm•cm. Letzterer Wert ist der spezifische Durchgangswiderstand der unverarbeiteten, elektrisch leitenden Kunststoffschicht.

Eine Vorrichtung zur Herstellung des neuen Schichtstoffes in einem kontinuierlichen Beschichtungsverfahren besteht beispielsweise aus mehreren Abwickelstationen, einer Vorrichtung zum Zusammenführen der Kunststoffschichten, einer Heizstrecke, einer Preßstrecke sowie einer Kühlstrecke.

Die Herstellung des Schichtstoffes verläuft unter Abrollung der als Folien vorliegenden Kunststoffe. Ist die Herstellung eines faserverstärkten schichtigen Halbzeuges beabsichtigt, können einzelne Rollen auch aus Fasergewebebahnen bestehen. Die abgewickelten Folienpassieren die Führungsvorrichtung und werden nachfolgend in der Aufheizstrecke zum Schmelzen gebracht; dies geschieht bei Temperaturen von 150°C bis 400°C, vorzugsweise bei Temperaturen von 250°C bis 330°C. In der Presse werden die Komponenten zusammengedrückt und in der anschließenden Kühlstrecke unter den Schmelzpunkt abgekühlt, bevorzugt unter 100°C.

In einer beispielhaften Variante werden extrudierfähige Folien der Beschichtungsstrecke, bestehend aus Führung, Heizstrecke, Presse und der Kühlstrecke, direkt aus den Extrudern zugeführt.

Eine weitere Variante zur kontinuierlichen Herstellung des neuen Schichtstoffes ist eine Vorrichtung, bestehend aus mehreren Abwickelstationen, einer Vorrichtung zum Zusammenführen der Kunststoffschichten, einer Heizstrecke zum Anschmelzen der Kunststoffschichten, einer Preßvorrichtung, sowie zwei weiteren Abwickelstationen zur Aufnahme elektrisch leitenderKunststoffolie sowie zweier beheizbarer Andruckrollen und einer Kühlstrecke.

Die zu verschweißenden Kunststoffbahnen sind zu Rollen gewickelt. Bei der Herstellung eines faserverstärkten Kunststofflaminats können auch Rollen mit Glasgewebe verwendet werden.

Die einzelnen Kunststoffolien bzw. die Bahnen aus Glasgewebe werden mittels der Führungsvorrichtung gebündelt und in die Heizstrecke gelenkt. Nach dem Anschmelzen der Kunststoffbahnen in der Heizstrecke wird in der Presse der zum Verschweißen der Kunststoffschichten notwendige Preßdruck ausgeübt. Danach werden die von den Rollen geführten, elektrisch leitenden Kunststoffbahnen mittels der beheizbaren Andruckrollen mit den äußeren Schichten des aus der Presse geführten Kunststofflaminats verschweißt. Anschließend wird das Kunststofflaminat in der Kühlvorrichtung abgekühlt, bevorzugt unter 100°C.

## Ansprüche

1. Halbzeug, bestehend aus mindestens zwei Kunststoffschichten, wovon mindestens eine Schicht ein elektrisch leitender Kunststoff ist, dadurch gekennzeichnet, daß beide Kunststoffschichten ein unterschiedliches Basismaterial aufweisen und zwischen der elektrisch leitenden Kunststoffschicht und der zweiten Kunststoffschicht eine Schweißverbindung besteht und die elektrische Leitfähigkeit der leitenden Kunststoffschicht noch mindestens 40 % ihrer ursprünglichen elektrischen Leitfähigkeit besitzt.

2. Halbzeug nach Anspruch 1, dadurch gekennzeichnet, daß die elektrisch leitende Kunststoffschicht aus Polycarbonaten mit einen Zusatz nichtmetallischer leitender Stoffe, insbesondere Leitfähigkeitsruß, besteht.

3. Halbzeug nach Anspruch 1, dadurch gekennzeichnet, daß die zweite Kunststoffschicht ein nicht elektrisch leitender, thermoplastisch verarbeitbarer, auch mehrphasige Polymerisationskunststoff ist, vorzugsweise aus Polysarylensulfiden oder Polyestern.

4. Halbzeug nach Anspruch 3, dadurch gekennzeichnet, daß die nicht elektrisch leitende Kunststoffschicht aus einem faserverstärkten Kunststoff besteht.

5. Elektrisch leitfähiges Polycarbonat, bestehend aus
a) Polycarbonat auf Grundlage von Dihydroxydiphenylcycloalkanen und
b) an sich bekannten Leitfähigkeitszusätzen.

FIG.1

FIG.2

FIG.3

FIG.4

FIG.5

FIG.6

FIG.7

FIG. 8

EP 0 435 044 A2